# EUROPÄISCHE PATENTANMELDUNG

(11) **EP 1 124 133 A2**
(43) Veröffentlichungstag der Anmeldung: **16.08.2001**
(21) Anmeldenummer: 01103102.8
(22) Anmeldetag: 09.02.2001
(51) Int. Cl.: G01N 27/414

(54) **Gassensitiver FET**

(30) Priorität: 11.02.2000 DE 10006237
(71) Anmelder: SIEMENS AKTIENGESELLSCHAFT, 80333 München (DE)
(72) Erfinder: Fleischer, Maximilian, Dr., 85635 Höhenkirchen (DE); Meixner, Hans, Prof., 85540 Haar (DE); Ostrick, Bernhard, 81541 München (DE); Pohle, Roland, Dr., 85570 Herdweg (DE); Simon, Elfriede, Dr., 80639 München (DE)

(57) **Zusammenfassung**

Beschrieben wird ein gassensitiver FET mit einer sensitiven Schicht und einem Gaszutritt an diese ermöglichenden Aufbau, um auf Gaszutritt hin elektrische Eigenschaftsveränderungen erfassen zu können. Hierzu wird vorgeschlagen, daß die sensitive Schicht aus polykristallinem Material porös aufgebaut ist, um so den Gaszutritt ermöglichenden Aufbau vorzusehen.

## Beschreibung

Die vorliegende Erfindung betrifft einen gassensitiven FET und ein Verfahren zu dessen Herstellung.

Es ist prinzipiell bekannt, Feldeffekttransistoren zur Gasdetektion einzusetzen. Ein solcher FET umfaßt zunächst in einem z.B. aus Silizium bestehenden Basiselement einen Source- und einen Drainanschluß, zwischen welchen ein Kanalbereich verläuft. Dem Kanalbereich benachbart ist eine von diesem isolierte Gateelektrode vorgesehen. Wird an diese eine Steuerspannung angelegt, kann der durch den Kanal zwischen Drain- und Sourceelektrode fließende Strom verändert werden. Um dem Bauteil die erforderliche Gasempfindlichkeit zu verleihen, kann nun bei der Gate-Elektrode eine sensitive Schicht vorgesehen werden. Diese wird so gewählt, daß eindringende oder angelagerte Gase entweder die inneren Potentiale im Bauelement verändern und/oder an wenigstens einer der Grenzschichten zu einer Potentialveränderung etwa durch sich ausbildende Dipolschichten führen; diese gasbedingten Veränderungen sind elektrisch erfaßbar.

Zwingend erforderlich zur Detektion der Gase ist bei diesem Bauelement jedoch, daß die Gase an bzw. in die sensitive Schicht gelangen. Hierzu gibt es im Stand der Technik mehrere Vorschläge. So wurde vorgeschlagen, in der Struktur einen Gaskanal vorzusehen, der z.B. mit einem Gaseinlaß in der Gatelelektrode kommuniziert. Dies ist hinsichtlich der Bauteil-Bearbeitung aufwendig, da die Dimensionierung von Gaskanal und Einlaß kritisch ist.

In einem weiteren Ansatz wird die sensitive Schicht selbst durchlässig für das zu bestimmende Gas gewählt; ein Beispiel sind Wasserstoffsensoren, die mit einer Palladiummetall-Oxid-Halbleiterstruktur aufgebaut werden und eine Palladiumschicht verwenden, durch die Wasserstoff hindurchdiffundieren kann. Weiter sind zur Lösungsmitteldetektion Polymerschichten verwendbar, durch welche die Lösungsmittel gleichfalls diffundieren können. Da hier die geschlossenen Schichten die Gasdiffusion behindern, ist bereits vorgeschlagen worden, die Schicht so zu strukturieren, daß sie Gaseinlässe enthält. Verwiesen wird hierzu auf Svennigstorp et al., MISIC Schottky Diodes as NOx Sensors in simulated exhaust gas, Proceedings of Eurosensors XIII, 1999, The Hague, S. 501 - 502. Danach soll eine Schicht entweder unter Verwendung etwa von Polymermasken nanostrukturiert werden oder auf einem porösen Untergrund bzw. in selbst poröser Weise abgeschieden werden, wobei sich eine mehr oder weniger durchgehende Schicht mit Löchern und/oder Rissen ausbildet. Problematisch ist hier, daß die Porosität entscheidend von den Abscheidebedingungen abhängt, was die Prozeßkontrolle erschwert und die Herstellung verteuert. Es ist zudem erforderlich, die Abscheidebedingungen abhängig von dem Material zu wählen, so daß sich zugleich eine Abhängigkeit von dem nachzuweisenden Gas ergibt.

Die Aufgabe der vorliegenden Erfindung besteht darin, Neues für die gewerbliche Anwendung bereitzustellen.

Die Lösung dieser Aufgabe wird unabhängig beansprucht. Bevorzugte Ausführungsformen finden sich in den Unteransprüchen.

Ein erster Aspekt der Erfindung besteht also darin, daß bei einem gassensitiven FET mit einer sensitiven Schicht und einem Gaszutritt an diese ermöglichenden Aufbau, um auf Gaszutritt hin elektrische Eigenschaftsveränderungen erfassen zu können, vorgesehen wird, daß die sensitive Schicht aus polykristallinem Material porös aufgebaut ist, um so den Gaszutritt ermöglichenden Aufbau vorzusehen.

Hierbei ist ein wesentlicher Gedanke in der Erkenntnis zu sehen, daß die einfache Verwendung eines leicht verfügbaren polykristallinen Materials beim Schichtaufbau bereits die Anwesenheit von Körnern und Kristalliten unterschiedlicher Größe bedingt. Es wurde erkannt, daß diese Granurlatät nicht nur bei der Materialaufbringung und während der Weiterverarbeitung der zu erzeugenden FETs weitgehend erhalten bleibt, sondern daß durch den praktisch unveränderten Erhalt der Granularität und der Körner in ihrer jeweiligen Größe eine Porosität auch ohne weitere Maßnahmen erzielt werden kann. Dies ist dadurch bedingt, daß die unterschiedlich großen Körner nicht vollständig eng gepackt werden, sondern sich intergranulare Freiräume ausbilden, die für die Gasdiffusion ausreichen. Dabei bilden sich bezogen auf das Basiselement sowohl laterale als auch horizontale Gaskanäle aus, die so ein gleichmäßiges Eindringen der zu detektierenden Gase in die Schicht ermöglichen. Es wurde erkannt, daß sich dabei trotz der stochastischen Anordnung der Körner nur durch die räumliche Mittelung auch ohne explizite Luftspaltbildung eine hinreichend hohe und über Bauteile hinweg praktisch konstante Gesamt-Gaspermeabilität und/oder -diffusivität ergibt. Dabei kann zugleich durch die Korngröße auf einfache Weise die Luftspaltgröße und/oder die Gatekapazität verändert werden.

Auf diese Weise kann für eine Vielzahl auf unterschiedliche Gase empfindlicher Materialien eine geeignete sensitive Schicht ohne wesentliche Umstellung jeweiliger Herstellungsprozesse realisiert werden.

Es ist bevorzugt, wenn die Korngrößen im porösen Ausgangsmaterial so gewählt sind, daß zumindest ein Teil der Körner in direkten Kontakt mit einem Kanalbereich des FET treten kann. Dazu braucht lediglich ein bestimmter Anteil der Körner kleiner sein als die typischen Abmessungen des am Kanal freigelegten Bereichs im Bauelement, so daß die Körner an diesen freigelegten Kanalbereich eindringen können und darauf zu liegen gelangen.

Es ist auch möglich, das polykristalline Material in eine Trägermatrix einzubetten und/oder insbesondere mit Haftvermittlern zu überziehen. Hierdurch kann insbesondere vermieden werden, daß die Temperatur bei weiteren Verarbeitungsschritten unerwünscht hoch gewählt werden muß, nur um einen Kornverbund zu erzielen, was die Korngröße verändern könnte.

Es ist möglich, daß die Körner einen leitfähigen Film bilden. Dies kann durch hohe eigene Leitfähigkeit erreicht werden oder indem sich aufgrund von Oberflächenfeuchte ein leitfähiger Film ausbildet. Weiter kann eine Metallisierung auf den Körnern des polykristallinen Materials und/oder ein leitfähiger Überzug vorgesehen sein. Wenn die Körner der sensitiven Schicht einen leitfähigen Film bilden, kann insbesondere seitlich eine Gateanschlußkontaktierung vorgesehen sein, um so direkt eine Gateelektrode zu realisieren. Alternativ oder, etwa bei vorhandener, aber nur geringer Leitfähigkeit gegebenenfalls auch zusätzlich, kann die Gateelektrode des FET insbesondere netzartig aufgesputtert, aufgedampft und/oder siebgedruckt sein.

Wenn ein separates Gatematerial verwendet wird, ist es möglich, daraus ein Trägersubstrat zu bilden, auf dieses das polykristalline Material aufzutragen und dann das Trägersubstrat mit dem polykristallinen Material auf ein (Si- )Bassissubstrat zu übertragen. Alternativ ist es auch möglich, ein anderes als das später die Gateelektrode bildende Trägermaterial z.B. durch Siebdruck mit einer Struktur aus sensitivem Material zu versehen und dann das so darauf vorgesehene keramische polykristalline Material von dem Trägermaterial auf einen vorbereiteten Wafer mit einer Vielzahl zu bildender Bauelemente zu übertragen.

Beansprucht wird auch ein Verfahren zur Herstellung eines gassensitiven FET mit einer sensitiven Schicht und einem Gaszutritt in diese ermöglichenden Aufbau, um auf Gaszutritt hin elektrische Eigenschaftsveränderungen erfassen zu können, wobei die sensitive Schicht aus polykristallinem Material porös aufgebaut wird, um so den Gaszutritt ermöglichenden Aufbau vorzusehen. Es ist hierbei möglich, daß das Material gemeinsam mit bzw. in einem die Auftragung erleichternden Träger aufgetragen wird. Dazu können das polykristalline, keramische Material und der Träger eine Paste, eine Dispersion, ein Sol und/oder ein Gel bilden.

Wenn ein Träger verwendet wird, kann dieser in einem bevorzugten Ausführungsbeispiel im fertigen Bauelement haftungsverbessernde Rückstände hinterlassen.

Es kann vorgesehen sein, daß das keramische polykristalline Material durch Siebdruck, Tampondruck, Dispensierung oder Sprühtechniken direkt oder indirekt aufgetragen wird. Die indirekte Auftragung kann erfolgen, indem das keramische polykristalline Material zunächst strukturiert auf ein Substrat aufgebracht und von diesem dann auf einen Wafer übertragen wird, auf welchem eine Vielzahl teilfertiger FET-Strukturen vorgesehen ist

Die Erfindung wird im folgenden nur beispielsweise anhand der Zeichnung beschrieben. In dieser zeigt:
- Fig.1: einen gassensitiven FET gemäß der vorliegenden Erfindung mit einer leitfähigen, porösen sensitiven Schicht;
- Fig. 2: einen gassensitiven FET gemäß der vorliegenden Erfindung mit einer nicht leitfähigen, porösen sensitiven Schicht;
- Fig. 3: einen Schritt bei der Herstellung eines erfindungsgemäßen FET mit nichtleitender sensitiver Schicht.

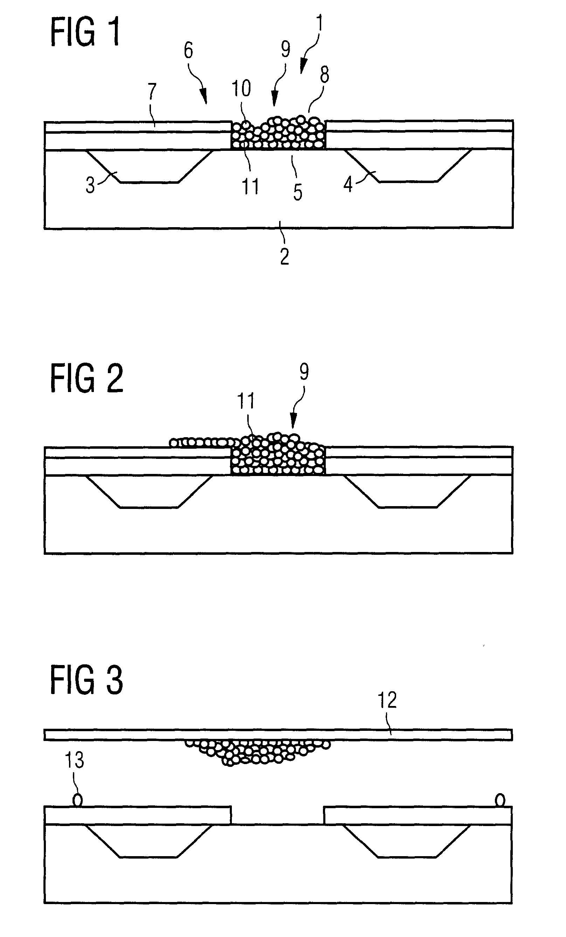

Nach Figur 1 umfaßt ein allgemein mit 1 bezeichneter gassensitiver FET 1 ein Silizium-Bassiselement 2 mit einem Sourcebereich 3 und einem Drain-Bereich 4, die in per se bekannter Weise und daher nicht näher dargestellter Weise mit Anschluß-metallisierungen versehen sind und zwischen denen in gleichfalls per se bekannter Weise ein Kanalbereich 5 mit nicht gezeigten Kanalisolierungen ausgebildet ist.

Auf dem Silizium-Basiselement 2 ist zumindest auf der Oberseite 6 eine passivierende Schicht 7 mit einer Ausnehmung 8 vorgesehen.

Erfindungsgemäß ist nun in der Ausnehmung 8 ein polykristallines keramisches Material 9 angeordnet, dessen Leitfähigkeit so hoch ist, daß es als Gateelektrode wirkt und welches aus einer Vielzahl an unterschiedlich großen Körnern 10 besteht. Einige der Körner 10 sind so klein, daß sie in die Ausnehmung 8 eindringend unmittelbar benachbart dem Kanalbereich 5 zu liegen kommen, während andere so groß sind, das insgesamt das gesamte polykristalline keramische Material 9 hindurch ein Gasdurchtritt durch die intergranulären Freiräume 11 ermöglicht wird. Das polykristalline Material 9 ist so gewählt, daß es in Zusammenwirken mit den weiteren Bauelementstrukturen die elektrischen Eigenschaften des Bauelementes in meßbarere Weise bei Anwesenheit eines nachzuweisenden Gases verändert. Es bildet somit das polykristalline, keramische Material 9 eine gassensitive Schicht.

Der gasempfindliche Feldeffekttransistor wird hergestellt und benutzt wie folgt;

Zunächst wird ein Wafer vorgesehen, der das Silizium-Bassiselement 2 mit Sourcebereich 3, Drain-Bereich 4 sowie dem Kanalbereich 5, den nicht gezeigten Kanalisolierungen und die passivierende Schicht 7 mit Ausnehmung 8 aufweist.

Dann wird auf einem Träger mittels Siebdruck entsprechend der Bauelementgeometrie eine Paste des polykristallinen, keramischen Materials 9 aufgetragen. Die Paste wird soviel Lösungsmittel enthalten, daß sie über die Kapillarwirkung in die Ausnehmung 8 gelangen kann. Alternativ wird die Paste derart vorgetrocknet und/oder eingehemmt, daß eine trockene aber mechanisch weiche Schicht entsteht und beim Aufpressen die Trägeranteile der Schicht durch den mechanischen Druck in den Kanalbereich gelangen können.

Von dem Träger wird das Material durch Aufdrücken auf das Silizim-Basiselement übertragen, wobei es in die Ausnehmung 8 gelangt und so eine sensitive Schicht in Kontakt mit dem Kanalbereich bildet. Nun wird der gasempfindliche FET 1 in per se bekannter Weise fertig gestellt, wobei sich keine signifikanten Änderungen der Korngrößenverteilung mehr ergeben.

Der FET wird dann zur Benutzung angeschlossen. Gelangt nun das Gas, auf welches die durch das polykristalline Material 9 sensitive Schicht empfindlich ist, an den gassensitiven FET 1, so dringt dieses Gas in die sensitive Schicht ein und führt im Inneren des Bauelementes zu elektrischen Potentialverschiebungen zwischen dessen einzelnen Bereichen, etwa durch Potentialverschiebungen und/oder durch Ausbildung von Dipolschichten, was durch die angeschlossene Beschaltung (nicht gezeigt) als Änderung von elektrischen Meßgrößen erfaßt werden kann.

Das Ausführungsbeispiel von Fig. 2 entspricht jenem von Fig. 1 weitgehend und wird daher nur in seinen Abweichungen beschrieben. Anders als im Ausführungsbeispiel von Fig. 1 ist die sensitive Schicht im zweiten Ausführungsbeispiel nicht durch elektrisch leitendes, sondern durch elektrisch nichtleitendes polykristallines, keramisches Material 9 gebildet. Aus diesem Grund ist über dem polykristallinen keramischen Material 9 eine polykristalline Gatemetallisierung 11 vorgesehen, die aufgrund ihrer Struktur gleichfalls gut gasdurchlässig ist und etwa durch Sputtern, Aufdampfen oder als poröse Siebdruckschicht erhalten werden kann.

Nach Fig.3 wird bei einem weiteren Ausführungsbeispiel mit elektrisch nichtleitendem polykristallinem, keramischem Material 10a dieses gassensitive Material zunächst auf ein Trägersubstrat 12 aufgebracht, welches die spätere Gatemetallisierung bildet und/oder aufweist und welche dann mit einem Klebstoff 13 auf einem die FET-Halbleiterstrukturen aufweisenden Wafer befestigt wird.

## Patentansprüche

1. Gassensitiver Feldeffekttransistor (FET) mit einer sensitiven Schicht und einem Gaszutritt an diese ermöglichenden Aufbau, um auf Gaszutritt hin elektrische Eigenschaftsveränderungen erfassen zu können, dadurch gekennzeichnet, daß die sensitive Schicht aus polykristallinem Material porös aufgebaut ist, um so den Gaszutritt ermöglichenden Aufbau vorzusehen.

2. Gassensitiver FET nach dem vorhergehenden Anspruch, dadurch gekennzeichnet, daß das polykristalline oder poröse Material ein keramisches oder ionisches Material ist.

3. Gassensitiver FET nach den vorhergehenden Ansprüchen, dadurch gekennzeichnet, daß das polykristalline Material eine Vielzahl unterschiedlich großer Körner umfaßt.

4. Gassensitiver FET nach dem vorhergehenden Anspruch, dadurch gekennzeichnet, daß zumindest ein Teil der Körner eine solche Größe aufweist, daß sie in direkten Kontakt mit einem Kanalbereich des FET treten und/oder auf diesen gelangen können.

5. Gassensitiver FET nach einem der vorhergehenden Ansprüche, dadurch gekennzeichnet, daß das polykristalline Material in eine Trägermatrix eingebettet und/oder insbesondere mit Haftvermittlern überzogen ist.

6. Gassensitiver FET nach einem der vorhergehenden Ansprüche, dadurch gekennzeichnet, daß die unterschiedlich großen Körner einen leitfähigen Film bilden.

7. Gassensitiver FET nach dem vorhergehenden Anspruch, dadurch gekennzeichnet, daß eine Metallisierung auf den Körnern des polykristallinen Materials und/oder ein leitfähiger Überzug vorgesehen ist.

8. Gassensitiver FET nach einem der Ansprüche 5 oder 6 , dadurch gekennzeichnet, daß am polykristallinen Material seitlich eine Gateanschlußkontaktierung vorgesehen ist.

9. Gassensitiver FET nach einem der Ansprüche 1 bis 6, dadurch gekennzeichnet, daß die Gateelektrode des FET insbesondere netzartig aufgesputtert, aufgedampft und/oder siebgedruckt ist.

10. Gassensitiver FET, dadurch gekennzeichnet, daß das Gatematerial als Trägersubstrat für das polykristalline Material gebildet ist und mit diesem auf ein Halbleitergundelement aufgebracht ist.

11. Verfahren zur Herstellung eines gassensitiven FET mit einer sensitiven Schicht und einem Gaszutritt in diese ermöglichenden Aufbau, um auf Gaszutritt hin elektrische Eigenschaftsveränderungen erfassen zu können, dadurch gekennzeichnet, daß die sensitive Schicht aus polykristallinem Material porös aufgebaut wird, um so den Gaszutritt ermöglichenden Aufbau vorzusehen.

12. Verfahren zur Herstellung eines gassensitiven FET nach dem vorhergehenden Anspruch, dadurch gekennzeichnet, daß das polykristalline Material gemeinsam mit einem die Auftragung erleichternden Trägersubstanz aufgetragen wird.

13. Verfahren zur Herstellung eines gassensitiven FET nach Anspruch 11, dadurch gekennzeichnet, daß das polykristalline, insbesondere keramische Material und der Träger eine Paste bilden, die zum Aufbau der sensitiven Schicht aufgetragen wird.

14. Verfahren zur Herstellung eines gassensitiven FET nach Anspruch 12, dadurch gekennzeichnet, daß das polykristalline Material und der Träger eine Dispersion, ein Sol und/oder ein Gel bilden.

15. Verfahren zur Herstellung eines gassensitiven FET nach einem der Ansprüche 12 bis 14, dadurch gekennzeichnet, daß ein Träger verwendet wird, der haftungsverbessernden Rückstände hinterläßt.

16. Verfahren zur Herstellung eines gassensitiven FET nach einem der vorhergehenden Verfahrensansprüche, dadurch gekennzeichnet, daß das insbesondere keramische polykristalline Material durch Siebdruck, Tampondruck, Dispensierung oder Sprühtechniken aufgetragen wird.

17. Verfahren zur Herstellung eines gassensitiven FET nach einem der vorhergehenden Verfahrensansprüche, dadurch gekennzeichnet, daß das insbesondere keramische polykristalline Material zunächst strukturiert auf ein Substrat aufgebracht und von diesem dann auf einen Wafer gebracht wird, auf welchem eine Vielzahl teilfertiger FET-Strukturen vorgesehen ist.
